# EUROPÄISCHE PATENTANMELDUNG

(11) **EP 3 118 039 A1**
(43) Veröffentlichungstag der Anmeldung: **18.01.2017**
(21) Anmeldenummer: 16176881.7
(22) Anmeldetag: 29.06.2016
(51) Int. Cl.: B60J 7/12, B60J 7/14

(54) **CABRIOLET-VERDECK MIT GEMEINSAM VERSCHWENKBAREN DACHLENKERN**

(30) Priorität: 16.07.2015 DE 102015111557
(71) Anmelder: Webasto-Edscha Cabrio GmbH, 82131 Stockdorf (DE)
(72) Erfinder: WÜLLRICH, Heinrich, 82131 Stockdorf (DE); SVIBERG, Magnus, 82131 Stockdorf (DE)
(74) Vertreter: advotec.

(57) **Zusammenfassung**

Es wird ein Verdeck eines Cabriolet-Fahrzeugs vorgeschlagen, umfassend ein Verdeckgestänge, das zwischen einer Schließstellung, in der ein Fahrzeuginnenraum von dem Verdeck überspannt ist, und einer Ablagestellung verstellbar ist, in der der Fahrzeuginnenraum nach oben freigegeben ist, und das bezogen auf eine vertikale Verdecklängsmittelebene beidseits jeweils eine Gestängeanordnung (18) aufweist, die eine Hauptmehrgelenkanordnung (22) mit zwei an einem fahrzeugfesten Hauptlager (20) schwenkbar gelagerten Hauptlenkern (24, 26), einen mittleren Dachlenker (29), einen mit dem mittleren Dachlenker (29) schwenkbar verbundenen, vorderen Dachlenker (36) und einen mit dem mittleren Dachlenker (29) schwenkbar verbundenen, hinteren Dachlenker (38) umfasst. Der vordere Dachlenker (36) und der hintere Dachlenker (38) sind mittels einer Koppelstange (58) gemeinsam gegenüber dem mittleren Dachlenker (29) verschwenkbar und die Hauptmehrgelenkmechanik (22) ist von einem Hauptantrieb angetrieben, der an dem Hauptlager (20) angeordnet ist. Der vordere Dachlenker (36) und der hintere Dachlenker (38) sind zum Verschwenken gegenüber dem mittleren Dachlenker (29) über eine Koppeleinrichtung mittels des Hauptantriebs angetrieben.

## Beschreibung

Die Erfindung betrifft ein Verdeck eines Cabriolet-Fahrzeugs mit den Merkmalen des Oberbegriffs des Patentanspruchs 1.

Ein derartiges Verdeck ist aus der Praxis bekannt und umfasst ein Verdeckgestänge und ist beispielsweise als so genanntes Klappdach bzw. RHT (retractable hard top) ausgebildet, das drei starre Dachschalen aufweist, die mittels eines Verdeckgestänges zwischen einer Schließstellung, in der ein Fahrzeuginnenraum von dem Verdeck überspannt ist, und einer Ablagestellung verstellbar sind, in der der Fahrzeuginnenraum nach oben freigegeben ist. Das Verdeckgestänge umfasst bezogen auf eine vertikale Verdecklängsmittelebene beidseits jeweils eine Gestängeanordnung, die an einem jeweiligen heckseitigen fahrzeugfesten Hauptlager schwenkbar gelagert ist. Die Gestängeanordnungen umfassen jeweils eine Hauptmehrgelenkanordnung mit zwei an dem betreffenden Hauptlager gelagerten Hauptlenkern, einen mittleren Dachlenker, an dem eine mittlere Dachschale angebunden ist, einen vorderen Dachlenker, der mit dem mittleren Dachlenker schwenkbar verbunden ist und an dem eine vordere Dachschale angebunden ist, und einen hinteren Dachlenker, der mit dem mittleren Dachlenker schwenkbar verbunden ist und an dem eine hintere, eine Heckscheibe aufweisende Dachschale angebunden ist. Beim Verstellen des Verdecks aus der Schließstellung in die Ablagestellung werden zunächst die vordere Dachschale und die hintere Dachschale gemeinsam über die mittlere Dachschale geschwenkt. Anschließend wird das Paket aus den drei Dachschalen mittels der Hauptmehrgelenkanordnung in einem heckseitigen Verdeckkasten des betreffenden Fahrzeugs abgelegt. Die Verstellbewegung der vorderen Dachschale und der hinteren Dachschale gegenüber der mittleren Dachschale erfolgt mittels eines Hydraulikantriebs, der im Bereich des mittleren Dachlenkers angeordnet ist. Das Ablegen des Pakets aus den drei Dachschalen in dem Verdeckkasten erfolgt mittels eines Hauptantriebs, der im Bereich des jeweiligen Hauptlagers angeordnet ist und auf einen der beiden Hauptlenker wirkt.

Das vorstehend beschriebene Verdeck hat den Nachteil, dass der Hydraulikantrieb im Bereich des mittleren Dachlenkers für die vordere Dachschale und die hintere Dachschale bauraumintensiv ist und zudem hohe Kosten verursacht, da zusätzlich Hydraulikleitungen und eine Hydraulikpumpe in dem Fahrzeug vorgehalten werden müssen.

Der Erfindung liegt die Aufgabe zugrunde, ein Verdeck der einleitend genannten Gattung zu schaffen, das bezüglich des gemeinsamen Antriebs für den vorderen Dachlenker und den hinteren Dachlenker bauraumoptimiert und kostenoptimiert ausgebildet ist.

Diese Aufgabe ist erfindungsgemäß durch das Verdeck mit den Merkmalen des Patentanspruchs 1 gelöst.

Gemäß der Erfindung wird mithin vorgeschlagen, dass der vordere Dachlenker und der hintere Dachlenker einer Gestängeanordnung des Verdeckgestänges zum Verschwenken gegenüber dem mittleren Dachlenker dieser Gestängeanordnung über eine Koppeleinrichtung mittels des Hauptantriebs angetrieben sind. Bei dem Verdeck nach der Erfindung wird also der Hauptantrieb sowohl zum Antrieb der Hauptmehrgelenkanordnung als auch zum Verstellen des vorderen Dachlenkers und des hinteren Dachlenkers gegenüber dem mittleren Dachlenker genutzt. Im Bereich des mittleren Dachlenkers muss damit hierzu kein Bauraum für einen separaten Antrieb vorgehalten werden. Auch entfallen die Kosten für den separaten Antrieb. Zudem ist eine mechanische Synchronisierung der Bewegungen der Hauptmehrgelenkanordnung und der Dachschalen möglich.

Bei einer speziellen Ausführungsform des Verdecks nach der Erfindung umfasst die Koppeleinrichtung eine Koppellenkeranordnung, die entlang der Hauptlenkeranordnung geführt ist und die mit einer Mehrgelenkanordnung verbunden ist, an die der hintere Dachlenker angelenkt ist. In der Regel umfasst die Mehrgelenkanordnung, an die der hintere Dachlenker angelenkt ist, mindestens zwei Lenker, die über ein einfaches Gelenk oder auch über mehrere Gelenke mit dem mittleren Dachlenker verbunden sind.

Einer dieser beiden Lenker ist mittels der Koppellenkeranordnung antreibbar, so dass der hintere Dachlenker gegenüber dem mittleren Dachlenker verschwenkt werden kann.

Bei einer speziellen Ausführungsform des Verdecks nach der Erfindung umfasst die Koppellenkeranordnung mindestens zwei Koppellenker, die sich in einem gemeinsamen Gelenkpunkt oder an getrennten Gelenkpunkten an einem Umlenkhebel abstützen, der an einem der Hauptlenker oder an dem Hauptlager schwenkbar gelagert ist. Durch die Unterteilung der Koppellenkeranordnung in mehrere Koppellenker ist es möglich, präzise bzw. in gewünschter Weise dem Verlauf der Hauptmehrgelenkanordnung von dem Hauptlager zu der betreffenden Mehrgelenkanordnung für den hinteren Dachlenker zu folgen.

Das Verdeck nach der Erfindung ist insbesondere als Klappdach bzw. RHT (retractable hard top) ausgebildet und umfasst dann insbesondere drei Dachschalen, von denen eine vordere an dem vorderen Dachlenker, eine mittlere an dem mittleren Dachlenker und eine hintere an dem hinteren Dachlenker befestigt ist.

Denkbar ist es aber auch, dass das Verdeck nach der Erfindung ein Faltverdeck ist und der vordere Dachlenker zur Anbindung eines Frontspriegels dient und der mittlere Dachlenker einem Dachseitenholm zugeordnet ist und der hintere Dachlenker zum Antrieb eines heckseitigen Dachelements, wie einer Finne eines so genannten Finnenverdecks dient.

Die Mehrgelenkanordnung, mittels der der heckseitige Dachlenker gegenüber dem mittleren Dachlenker verstellt werden kann, umfasst bei einer bevorzugten Ausführungsform des Verdecks nach der Erfindung einen Dreieckslenker, der an einem die beiden Hauptlenker miteinander verbindenden Umlenkhebel schwenkbar gelagert ist und an dem die Koppellenkeranordnung und ein Steuerlenker angelenkt sind, der mit einem Lenker verbunden ist, an dem der hintere Dachlenker angelenkt ist. Dieser Lenker ist insbesondere bei einem Klappdach ein hier als Schalenhauptlenker bezeichneter Lenker, dessen Verschwenken ein Verstellen der hinteren Dachschale gegenüber der mittleren Dachschale auslöst.

Um die Verstellbewegung des hinteren Dachlenkers auf den vorderen Dachlenker übertragen zu können, ist die Koppelstange beispielsweise an den Lenker angebunden, der an dem hinteren Dachlenker angelenkt ist. Die Koppelstange ist dann entlang dem mittleren Dachlenker zu einer Lenkeranordnung für den vorderen Dachlenker geführt.

Der Hauptantrieb, mittels dessen die Hauptmehrgelenkanordnung angetrieben ist, kann als Hydraulikantrieb oder auch als Elektromotor ausgeführt sein. Insbesondere im Fall eines als Elektromotor ausgebildeten Hauptantriebs kann ein Antriebsrad vorgesehen sein, an das die Koppellenkeranordnung angelenkt ist. Das Antriebsrad ist beispielsweise ein Zahnrad, das mittels eines Antriebsritzels des Elektromotors angetrieben ist.

Um die Zahl der Antriebsbauteile gering zu halten, kann das Antriebsrad neben der Koppellenkeranordnung auch die Hauptmehrgelenkanordnung antreiben. In diesem Falle kann es vorteilhaft sein, wenn das Antriebsrad auf ein Vorgelege wirkt, das die Hauptlenkeranordnung antreibt und das zwischen dem Antriebsrad und dem angetriebenen Hauptlenker der Hauptmehrgelenkanordnung in Form mehrerer Zwischenlenker ausgebildet ist.

Es ist vorteilhaft, wenn vor dem Absenken der Dachschalen bzw. der Dachlenker in den Verdeckkasten die Dachlenker gegeneinander verstellt worden sind. Um dies zu gewährleisten, ist bei einer vorteilhaften Ausführungsform des Verdecks nach der Erfindung bei einer Drehung des Antriebsrads die Koppellenkeranordnung stets mit einem Antriebsmoment beaufschlagt, wohingegen die Hauptlenkeranordnung in Abhängigkeit von der Stellung eines Führungselements in einer hauptlagerfesten Führungsbahn entweder in Position gehalten ist oder mit einem Antriebsmoment beaufschlagt ist. Durch die Führungsbahn lässt sich also der Bewegungsablauf beim Verstellen des Verdecks steuern.

Die Steuerung des Antriebsmoments, das auf die Hauptmehrgelenkanordnung wirkt, ist beispielsweise so realisierbar, dass das Führungselement an einem Steuerlenker ausgebildet ist, der schwenkbar mit einem Dreieckslenker verbunden ist, dessen Schwenkachse mit einer Drehachse des Antriebsrads zusammenfällt. Bei Beaufschlagung der Hauptmehrgelenkanordnung mit einem Antriebsmoment ist durch eine entsprechende Stellung des Steuerlenkers bezüglich der Führungsbahn der Dreieckslenker drehfest gegenüber dem Antriebsrad angeordnet, so dass von dem Dreieckslenker über eine Zwischenlenkeranordnung das Antriebsmoment auf einen der Hauptlenker der Hauptmehrgelenkanordnung übertragen werden kann.

Bei einer zweckmäßigen Ausführungsform des Verdecks nach der Erfindung ist die Führungsbahn in mehrere Abschnitte unterteilt. Insbesondere weist sie einen ersten Führungsabschnitt auf, der konzentrisch zum Umfang des Antriebsrads verläuft, wohingegen ein zweiter Führungsabschnitt der Führungsbahn gegenüber dem ersten Führungsabschnitt einen gegensinnig bogenförmigen Verlauf hat, so dass bei einer Anordnung des Führungselements in dem ersten Führungsabschnitt von dem Antriebsrad das Antriebsmoment in die Hauptmehrgelenkanordnung eingetragen wird und bei einer Anordnung des Führungselements in dem zweiten Führungsabschnitt die Hauptmehrgelenkanordnung bei Antrieb des Antriebsrads stillsteht. Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Cabriolet-Verdecks nach der Erfindung ist in der Zeichnung schematisch vereinfacht dargestellt und wird in der nachfolgenden Beschreibung näher erläutet. Es zeigt:
- Figur 1: eine schematische Seitenansicht eines Cabriolet-Verdecks nach der Erfindung in Schließstellung;
- Figuren 1A, B und C: vergrößerte Darstellungen der Ausschnitte A, B und C in Figur 1;
- Figur 2: eine Figur 1 entsprechende Ansicht, jedoch in einer ersten Zwischenstellung;
- Figuren 2A, B und C: vergrößerte Darstellungen der Ausschnitte A, B und C in Figur 2;
- Figur 3: ebenfalls eine Figur 1 entsprechende Ansicht, jedoch in einer zweiten Zwischenstellung;
- Figuren 3A, B und C: vergrößerte Darstellungen der Ausschnitte A, B und C in Figur 3;
- Figur 4: ebenfalls eine Figur 1 entsprechende Ansicht, jedoch in einer dritten Zwischenstellung;
- Figuren 4A, B und C: vergrößerte Darstellungen der Ausschnitte A, B und C in Figur 4;
- Figur 5: ebenfalls eine Figur 1 entsprechende Ansicht des Verdecks, jedoch in Ablagestellung;

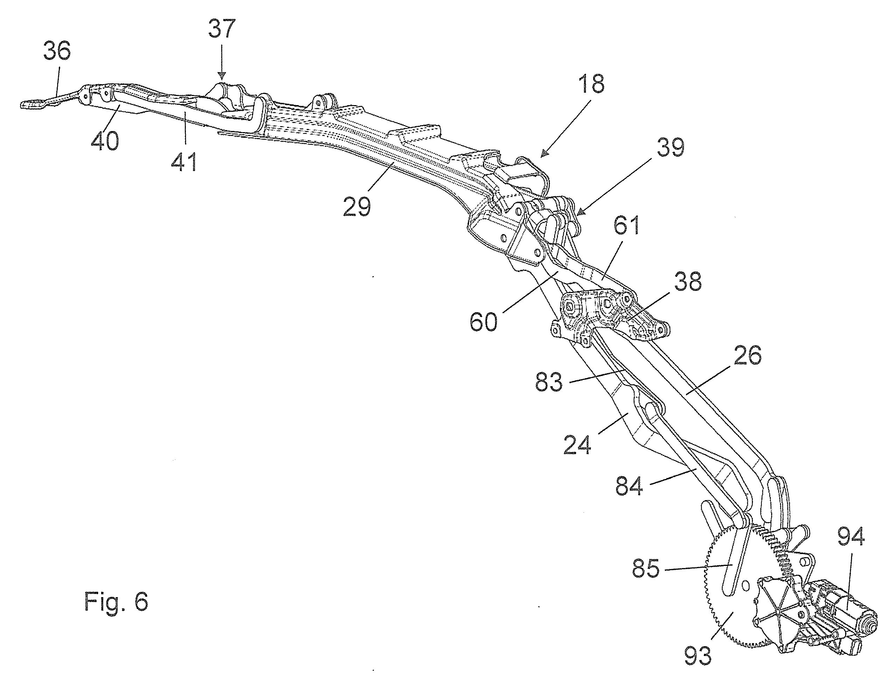

- Figur 6: eine perspektivische Ansicht einer Lenkeranordnung des Verdeckgestänges mit Antriebseinheit in der Schließstellung des Verdecks;

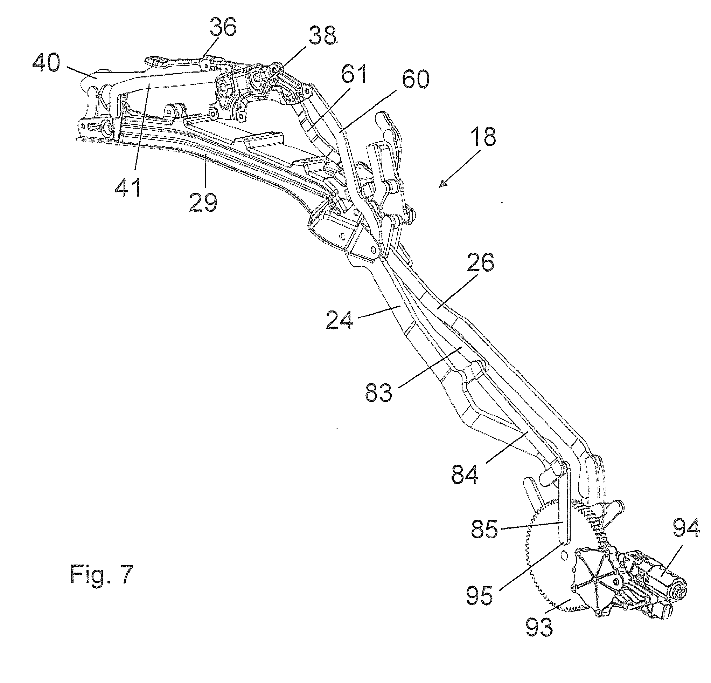

- Figur 7: eine Figur 6 entsprechende Ansicht der Lenkeranordnung in der zweiten Zwischenstellung;

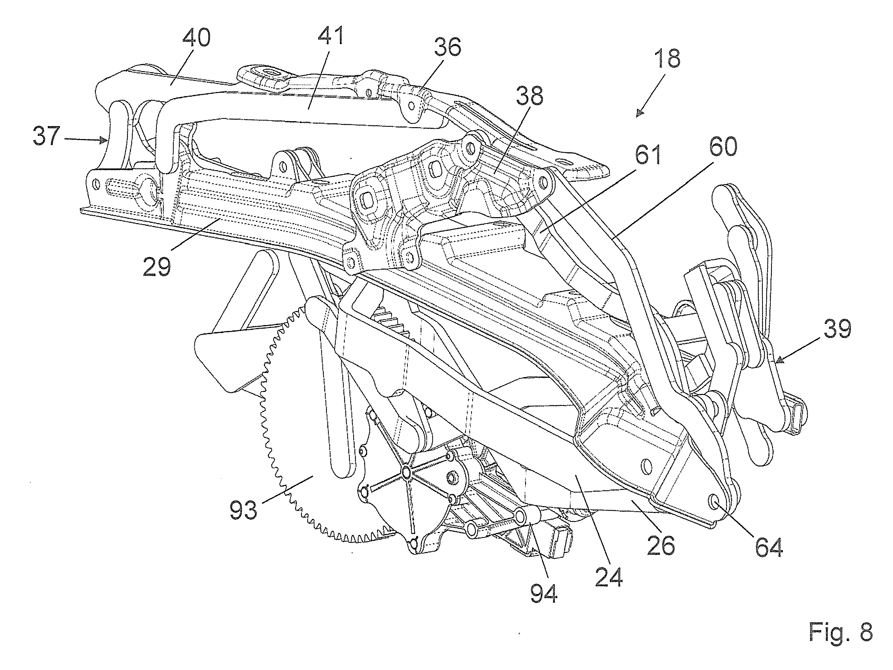

- Figur 8: eine Figur 6 entsprechende Ansicht der Lenkeranordnung, jedoch in der Ablagestellung des Verdecks;

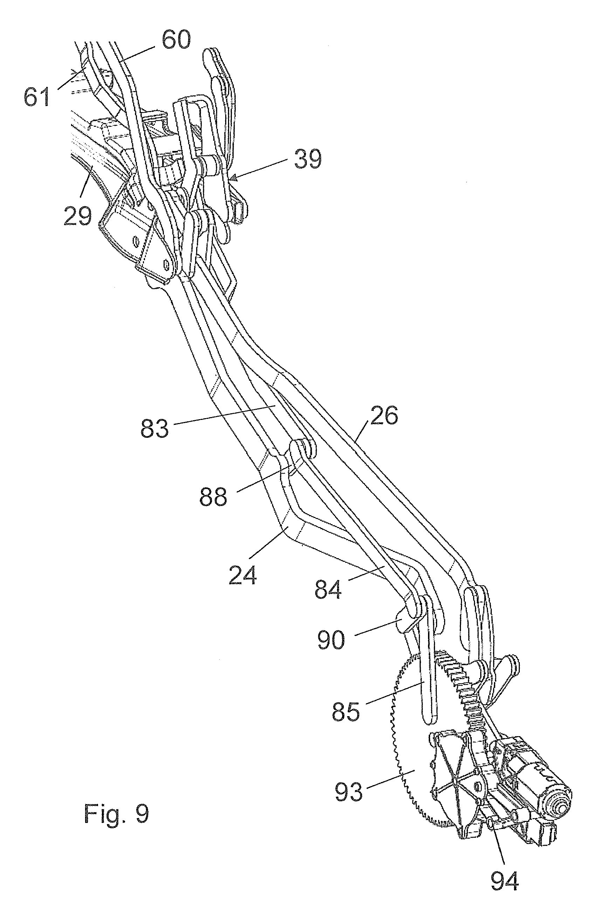

- Figur 9: eine vergrößerte Darstellung eines Heckabschnitts der Lenkeranordnung in einer ersten perspektivischen Darstellung; und

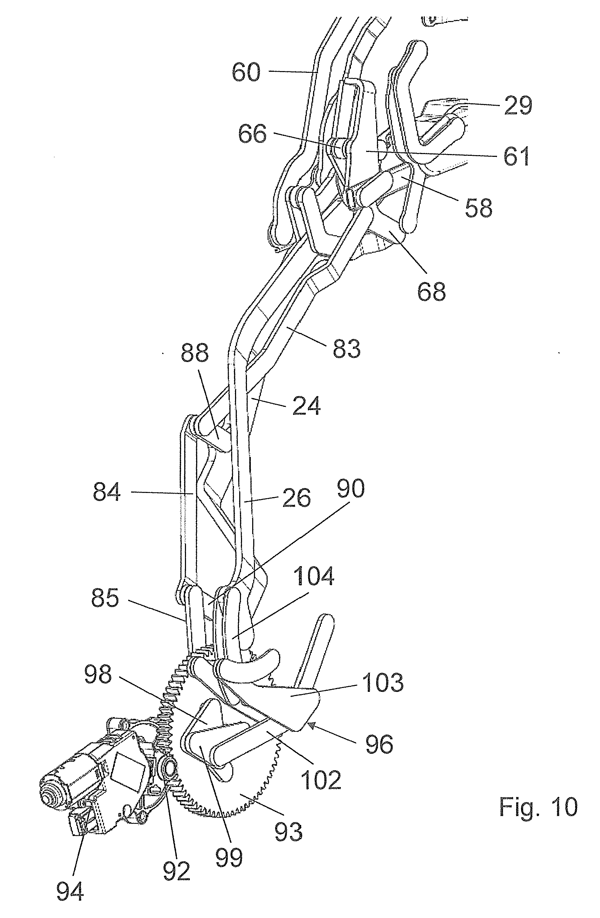

- Figur 10: eine zweite perspektivische Darstellung eines Heckabschnitts der Lenkeranordnung.

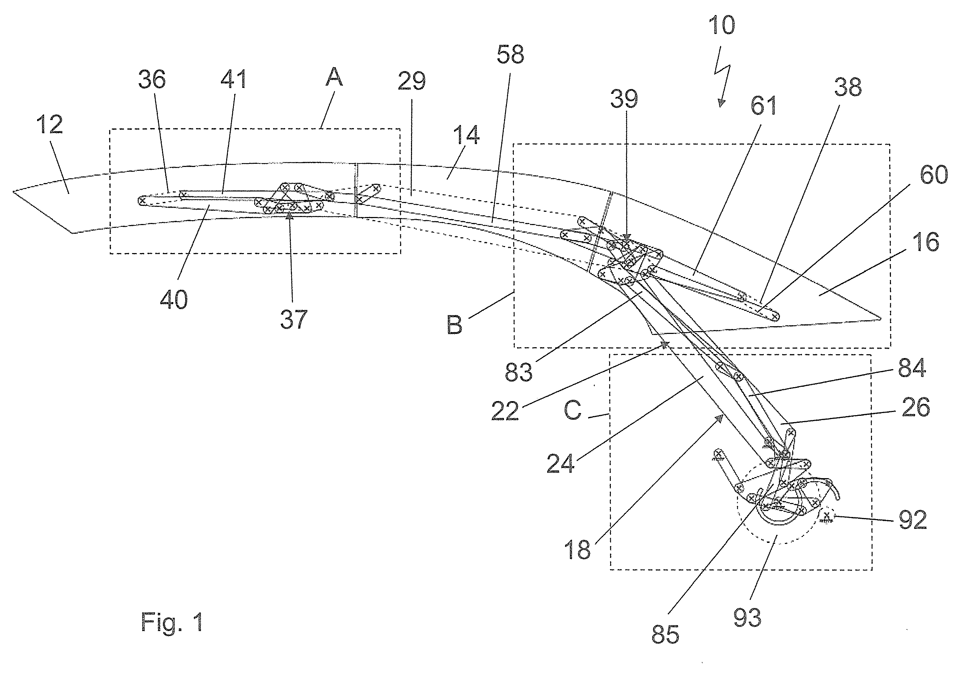

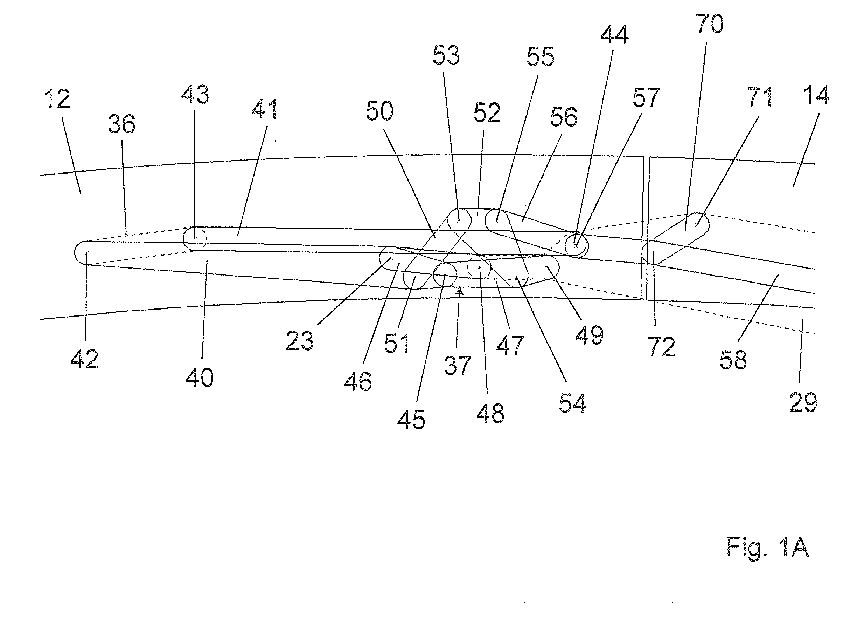

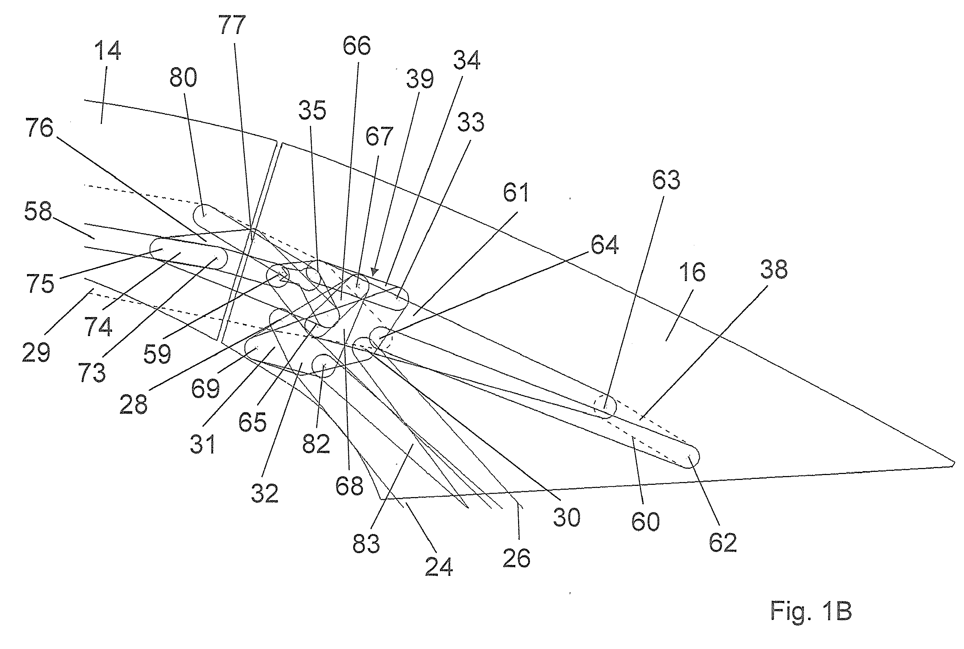

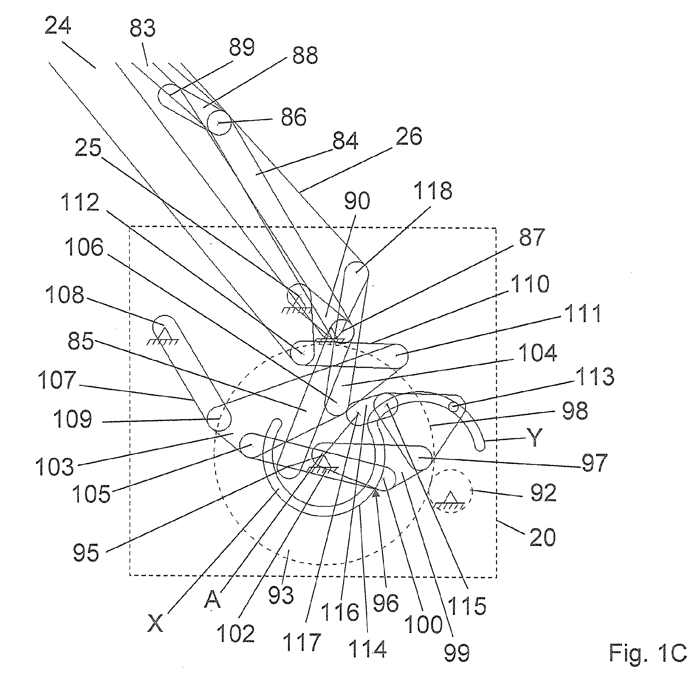

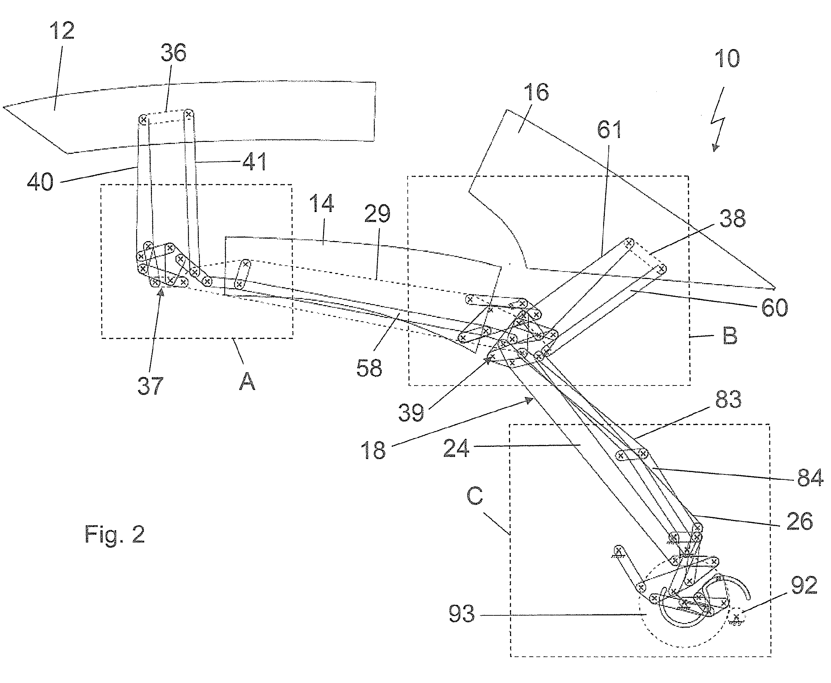

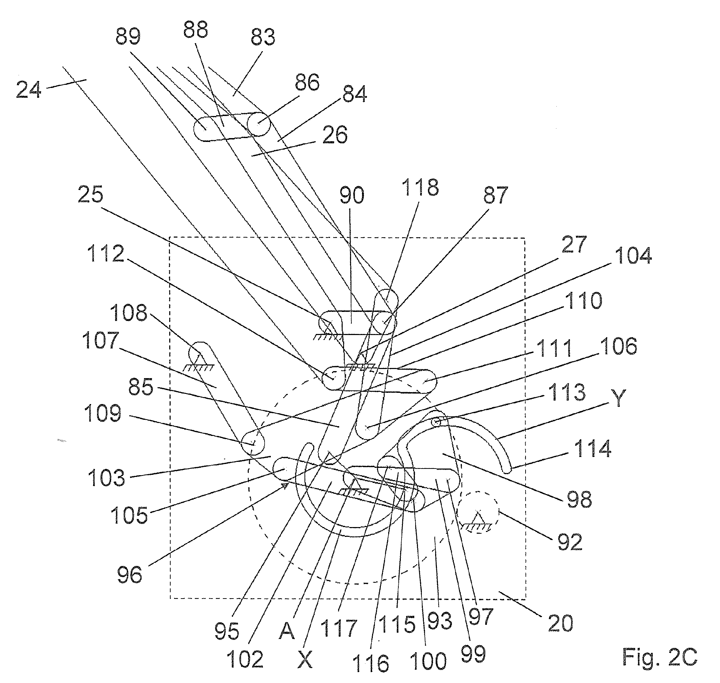

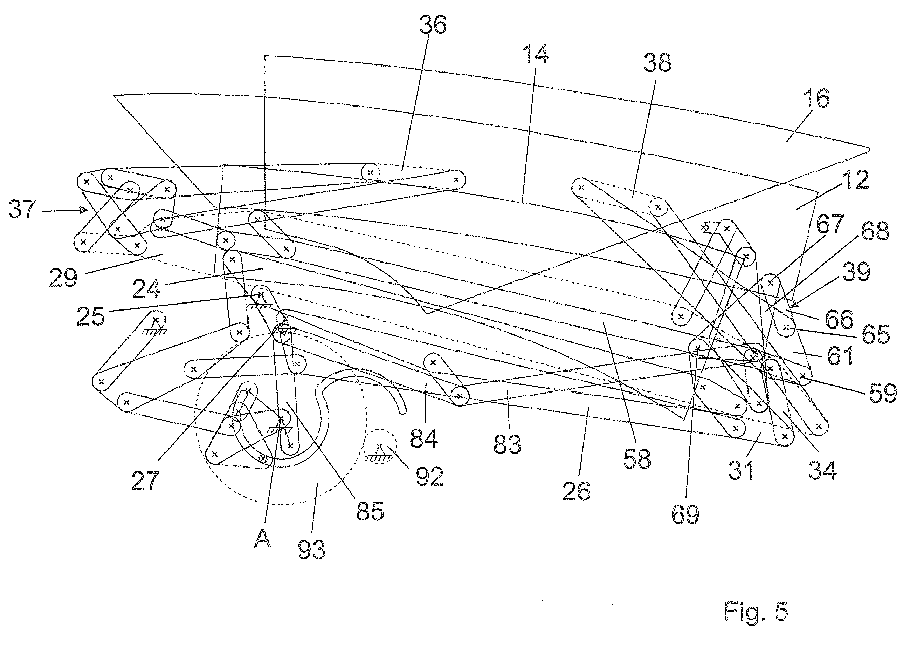

In der Zeichnung ist ein umwandelbares Dach 10 eines als Cabriolet ausgebildeten Kraftfahrzeuges dargestellt. Das umwandelbare Dach 10 umfasst drei Dachschalen 12, 14 und 16, die in der in Figur 1 dargestellten Schließstellung hintereinander angeordnet sind, und ist mithin als so genanntes RHT (retractable hard top) oder Klappdach ausgebildet. Die Dachschalen 12, 14 und 16 überspannen in der Schließstellung des Verdecks einen Innenraum eines nicht näher dargestellten Kraftfahrzeuges. In einer Öffnungsstellung, die in Figur 5 dargestellt ist, sind die Dachschalen 12, 14 und 16 in einem heckseitigen Verdeckablagekasten des betreffenden Kraftfahrzeuges angeordnet, so dass der Fahrzeuginnenraum nach oben freigegeben ist. Zum Verstellen der Dachschalen 12, 14 und 16 sind diese bezogen auf eine vertikale Verdecklängsmittelebene beidseits jeweils an einer Gestängeanordnung 18 eines Verdeckgestänges gelagert, die wiederum an einem jeweiligen heckseitigen Hauptlager 20 schwenkbar gelagert ist, das im Bereich des heckseitigen Verdeckablagekastens angeordnet ist und in den Figuren 1 C und 2C gestrichelt angedeutet ist.

Die beidseits angeordneten Lenkeranordnungen sind spiegelsymmetrisch zueinander ausgebildet. Daher erfolgt die nachfolgende Beschreibung der Übersichtlichkeit halber im Wesentlichen nur anhand der in bezogen auf die Vorwärtsfahrtrichtung des betreffenden Fahrzeugs links angeordneten Gestängeanordnung. Diese Beschreibung ist in unmittelbarer Weise auf die bezogen auf die Vorwärtsfahrtrichtung rechts angeordnete Gestängeanordnung übertragbar.

Die Gestängeanordnungen 18 umfassen jeweils ein an dem betreffenden Hauptlager 20 gelagertes Hauptmehrgelenk 22, das einen ersten Hauptlenker 24, der über einen Gelenkpunkt 25 an dem Hauptlager 20 schwenkbar gelagert ist, und einen zweiten Hauptlenker 26 umfasst, der über einen Gelenkpunkt 27 schwenkbar an dem Hauptlager 20 gelagert ist. Der erste Hauptlenker 24 ist mit seinem dem Hauptlager 20 abgewandten Ende über einen Gelenkpunkt 28 an einen mittleren Dachlenker 29 angebunden, der der mittleren Dachschale 14 zugeordnet ist. Der zweite Hauptlenker 26 ist mit seinem dem Hauptlager 20 abgewandten Ende über einen Gelenkpunkt 30 an einen Umlenkhebel 31 angelenkt, der über einen Gelenkpunkt 32 schwenkbar an dem ersten Hauptlenker 24 gelagert ist. Der Umlenkhebel 31 ist wiederum über einen weiteren Gelenkpunkt 33, der heckseitig von dem Gelenkpunkt 30 angeordnet ist, mit einem Steuerhebel 34 verbunden, der mit seinem dem Gelenkpunkt 33 abgewandten Ende über einen Gelenkpunkt 35 an dem mittleren Dachlenker 29 angelenkt ist.

Der vorderen Dachschale 12 ist ein vorderer Dachlenker 36 zugeordnet, der über eine vordere Mehrgelenkanordnung 37 an dem mittleren Dachlenker 29 angebunden ist. Die hintere Dachschale 16 ist an einem hinteren Dachlenker 38 befestigt, der über eine hintere Mehrgelenkanordnung 39 an dem mittleren Dachlenker 29 angebunden ist.

Die vordere Mehrgelenkanordnung 37 weist zwei Schalenhauptlenker 40 und 41 auf, die über Gelenkpunkte 42 und 43 an dem vorderen Dachlenker 36 angelenkt sind. Der Schalenhauptlenker 41 ist mit seinem dem vorderen Dachlenker 36 abgewandten Ende über einen Gelenkpunkt 44 direkt an den mittleren Dachlenker 29 angelenkt. Hingegen ist der andere Schalenhauptlenker 40 in seinem dem Dachlenker 36 abgewandten Endbereich über Gelenkpunkte 23 und 45 mit zwei Zwischenlenkern 46 und 47 verbunden, welche über Gelenkpunkte 48 und 49 an dem mittleren Dachlenker 29 angelenkt sind.

Um die vordere bzw. bugseitige Dachschale 12 gegenüber der mittleren Dachschale 14 verschwenken zu können, ist zwischen dem Schalenhauptlenker 40 und dem Zwischenlenker 47 eine Knickhebelanordnung aus einem ersten Hebel 50, der über einen Gelenkpunkt 51 an dem Schalenhauptlenker 40 angelenkt ist, und einem Dreieckslenker 52 angeordnet, der einerseits über einen Gelenkpunkt 53 mit dem Hebel 50 verbunden ist und andererseits über einen Gelenkpunkt 54 an den Zwischenlenker 47 angelenkt ist. Über einen Gelenkpunkt 55 ist an den Dreieckslenker 52 ein Stelllenker 56 angebunden, welcher über ein Gelenk 57 mit einer Koppelstange 58 verbunden ist, die, wie weiter unten näher beschrieben wird, an dem mittleren Dachlenker 29 gelagert ist und über einen Gelenkpunkt 59 mit der hinteren Mehrgelenkanordnung 39 der hinteren Dachschale 16 verbunden ist.

Die hintere Mehrgelenkanordnung 39 für die hintere bzw. heckseitige Dachschale 16 weist zwei Schalenhauptlenker 60 und 61 auf, die über Gelenkpunkte 62 und 63 an dem Dachlenker 38 angelenkt sind, an dem die hintere Dachschale 16 befestigt ist. Der Schalenhauptlenker 60 ist über einen einfachen Gelenkpunkt 64 am heckseitigen Ende des Dachlenkers 29 angelenkt. Der Schalenhauptlenker 61, der zum Verschwenken der Dachschale 16 gegenüber der mittleren Dachschale 14 angetrieben wird, ist über einen Gelenkpunkt 65 mit einem Steuerlenker 66 verbunden, welcher wiederum über einen Gelenkpunkt 67 mit einem Dreieckslenker 68 verbunden ist, der über einen Gelenkpunkt 69 schwenkbar an dem Umlenkhebel 31 gelagert ist. Zudem ist der Schalenhauptlenker 61 über den Gelenkpunkt 35 schwenkbar an den mittleren Dachlenker 29 angelenkt.

Die Koppelstange 58, die zu der vorderen Mehrgelenkanordnung 37 führt, ist über den Gelenkpunkt 59 an den Schalenhauptlenker 61 in einem Endbereich angebunden, der dem Dachlenker 38 der Dachschale 16 abgewandt ist.

Wie bereits oben ausgeführt, ist die Koppelstange 58 an dem mittleren Dachlenker 29 gelagert. Dies erfolgt über einen vorderen Lagerhebel 70, der über einen Gelenkpunkt 71 an dem mittleren Dachlenker 29 angelenkt ist und über einen Gelenkpunkt 72 an der Koppelstange 58 angelenkt ist. Zudem ist an die Koppelstange 58 über einen Gelenkpunkt 73 ein Lagerhebel 74 angelenkt, der über einen Gelenkpunkt 75 mit einem Dreieckslenker 76 verbunden ist, welcher an einem Anlenkpunkt 77 des mittleren Dachlenkers 29 schwenkbar gelagert ist. Zudem ist der Dreieckslenker 76 über zwei Zwischenlenker 78 und 79, die gelenkig miteinander verbunden sind, an einen weiteren Anlenkpunkt 80 des mittleren Dachlenkers 29 angebunden. Der Zwischenlenker 78 hat einen Gelenkpunkt 81 an dem Dreieckslenker 76.

Zum gleichzeitigen Verschwenken der vorderen Dachschale 12 und der hinteren Dachschale 16 gegenüber der mittleren Dachschale 14 ist der Dreieckslenker 68, der an dem Umlenkhebel 31 schwenkbar gelagert ist, über einen Gelenkpunkt 82 mit einer Koppellenkeranordnung verbunden, die drei Koppellenker 83, 84 und 85 aufweist, die über einfache Gelenke 86 und 87 miteinander verbunden sind. An dem Gelenk 86, das die Koppellenker 83 und 84 verbindet, ist auch ein Umlenkhebel 88 angebunden, der über einen Gelenkpunkt 89 an dem ersten Hauptlenker 24 schwenkbar gelagert ist. An dem Gelenk 87, das die Koppellenker 84 und 85 miteinander verbindet, ist ein weiterer Umlenkhebel 90 angebunden, welcher mit seinem dem Gelenkpunkt 87 abgewandten Ende über den Gelenkpunkt 25 hauptlagerfest gelagert ist.

Zum Antrieb weist das Dach 10 einen einen Hauptantrieb darstellenden Antriebsmotor 94 mit einem Antriebsritzel 92 auf, welcher ein Antriebsrad 93 antreibt. Das Antriebsrad 93 ist zum Betätigen der beiden Dachschalen 12 und 16 an einer Seite über einen Gelenkpunkt 95 mit dem Koppellenker 85 der Koppellenkeranordnung verbunden. An der dem Koppellenker 85 abgewandten Seite ist an das Antriebsrad 93 ein Antriebsgestänge 96 für das Hauptmehrgelenk 22 angebunden.

Das Antriebsgestänge 96 umfasst einen Steuerlenker 98, der als Dreieckslenker ausgebildet ist und in einem Gelenkpunkt 97 mit einem Dreieckslenker 99 verbunden ist, der um die hauptlagerfeste Achse A des Antriebsrades 93 schwenkbar ist. Der Dreieckslenker 99 ist zudem über einen Gelenkpunkt 100 mit einem Vorgelege verbunden, das einen Zwischenlenker 102, einen Zwischenlenker 103 und einen Zwischenlenker 104 umfasst, die über Gelenkpunkte 105 und 106 miteinander verbunden sind, wobei der Zwischenlenker 104 über einen Gelenkpunkt 118 an den zweiten Hauptlenker 26 angelenkt ist. Der Zwischenlenker 103 ist über einen Gelenkpunkt 109 mit einem ersten Stützhebel 107 verbunden, der an einem Anlenkpunkt 108 hauptlagerfest gelagert ist, und über einen zweiten Stützhebel 110, der in einem Gelenkpunkt 111 angelenkt ist, an einem Anlenkpunkt 112 mit dem ersten Hauptlenker 24 verbunden.

Der Steuerlenker 98 weist einen Führungszapfen 113 auf, der in einer S-förmigen, an dem Hauptlager 20 ausgebildeten Führungsbahn 114 geführt ist. Zudem ist an den Steuerlenker 98 über einen Gelenkpunkt 115 ein Übertragungslenker 116 angelenkt, der mit seinem dem Steuerlenker 98 abgewandten Ende über einen Anlenkpunkt 117 mit dem Antriebsrad 93 verbunden ist.

Die Führungsbahn 114, die an dem Hauptlager 20 ausgebildet ist, weist einen ersten Bahnabschnitt X auf, der bogenförmig ausgebildet ist und konzentrisch zum Umfang des Antriebsrads 93 um dessen Drehachse A verläuft. Der Bahnabschnitt X erstreckt sich über einen Bereich von etwa 180° bis 220°. An den Bahnabschnitt X schließt sich ein zweiter Bahnabschnitt Y an, der ebenfalls einen bogenförmigen Verlauf hat, der gegensinnig zu dem Verlauf des Bahnabschnitts X ist. Im weitesten Sinne hat der Bahnabschnitt Y bezogen auf die Achse A einen radialen Verlauf mit Krümmung.

Das vorstehend beschriebene Verdeck bzw. die vorstehend beschriebene Gestängeanordnung 18 des Verdecks 10 arbeitet in nachfolgend beschriebener Weise.

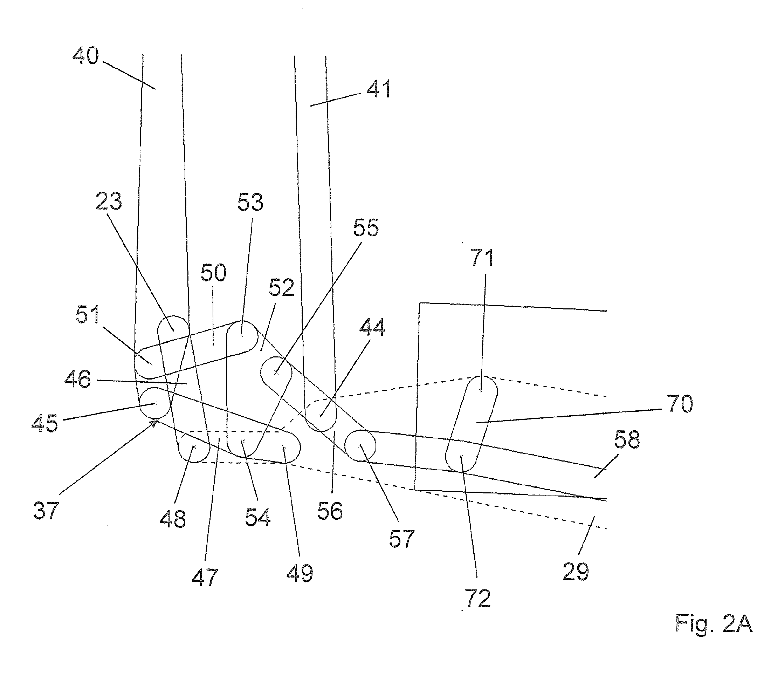

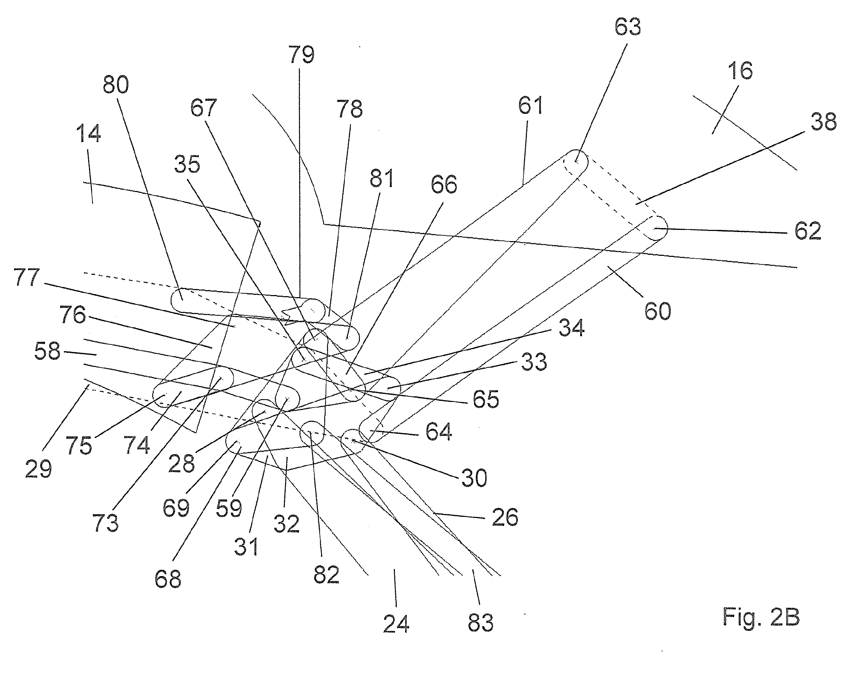

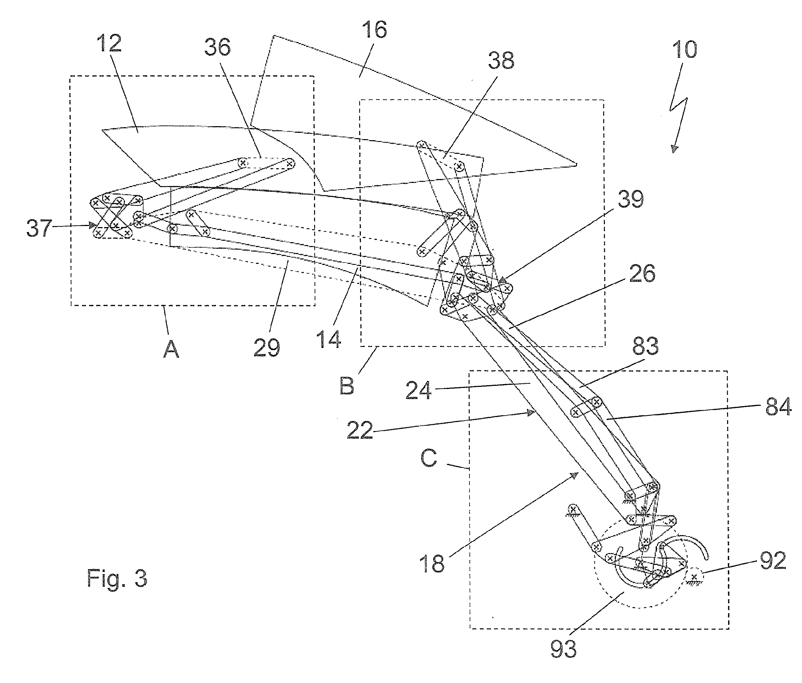

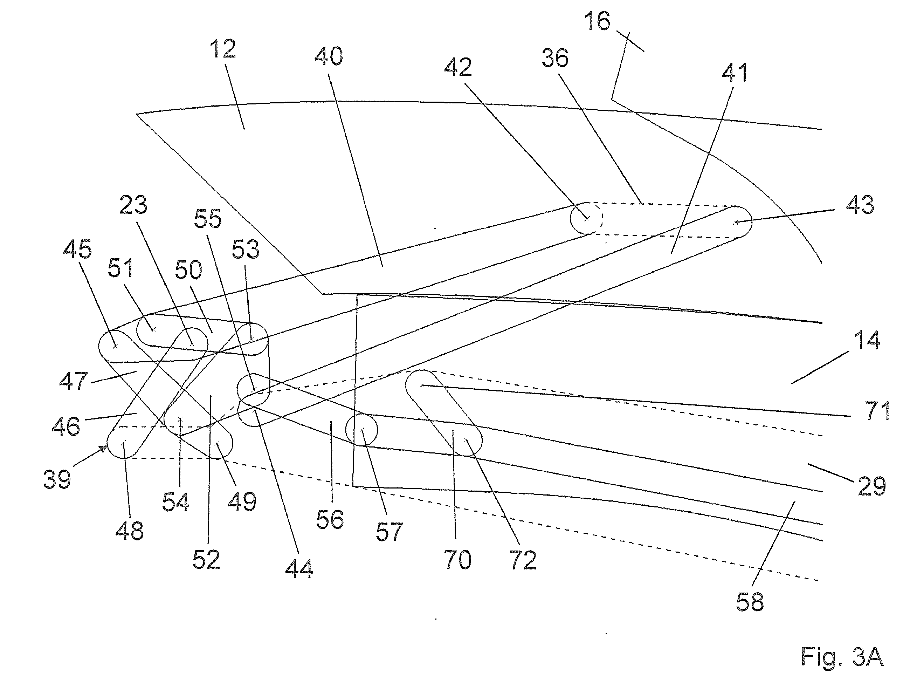

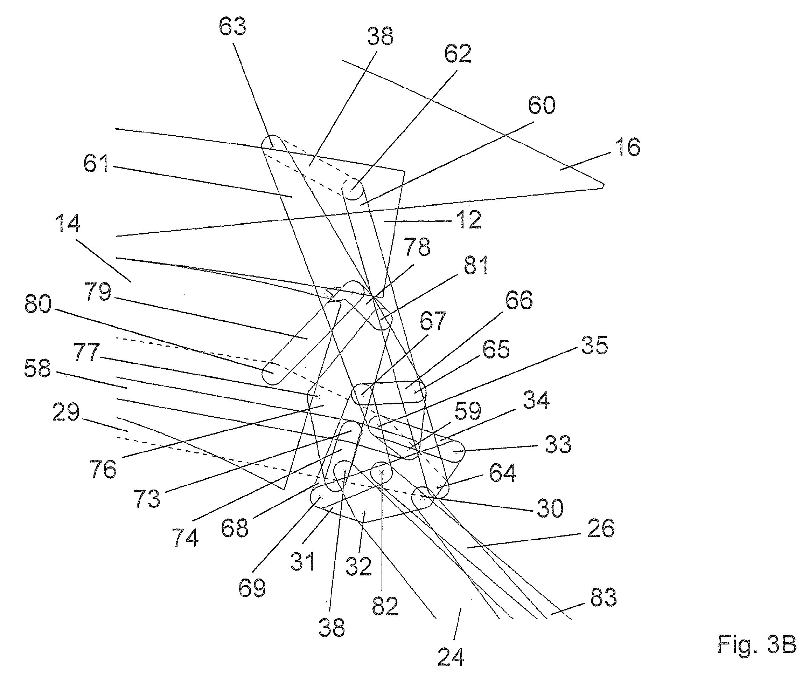

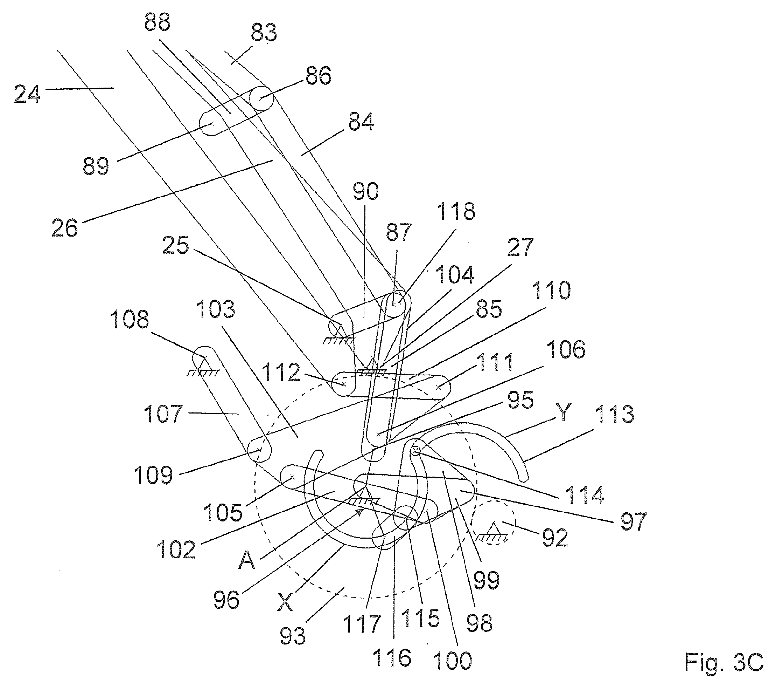

Ausgehend von der in Figur 1 dargestellten Schließstellung, in der der Fahrzeuginnenraum von den Dachschalen 12, 14 und 16 überspannt ist, wird das Antriebsrad 93 durch Betätigung des Antriebsmotors 94 bezogen auf die Ausrichtung in den Figuren 1 bis 5 im Uhrzeigersinn gedreht. Hierbei wird über die Koppellenker 83, 84 und 85, den Dreieckslenker 68 und den Steuerlenker 66 ein Verstellmoment in den Schalenhauptlenker 61 eingetragen, so dass die heckseitige Dachschale 16 in der in den Figuren 2 und 3 beschriebenen Weise nach vorne über die mittlere Dachschale 14 geschwenkt wird. Über die Koppelstange 58 wird gleichzeitig ein Verstellmoment in die vordere Mehrgelenkanordnung 37 eingetragen, so dass auch die vordere Dachschale 12 gegenüber der mittleren Dachschale 14 verschwenkt wird. Damit liegen die Dachschalen 12, 14 und 16 in gestapelter Weise übereinander, wobei die vordere Dachschale 12 zwischen der hinteren Dachschale 16 und der mittleren Dachschale 14 angeordnet ist (Fig. 3).

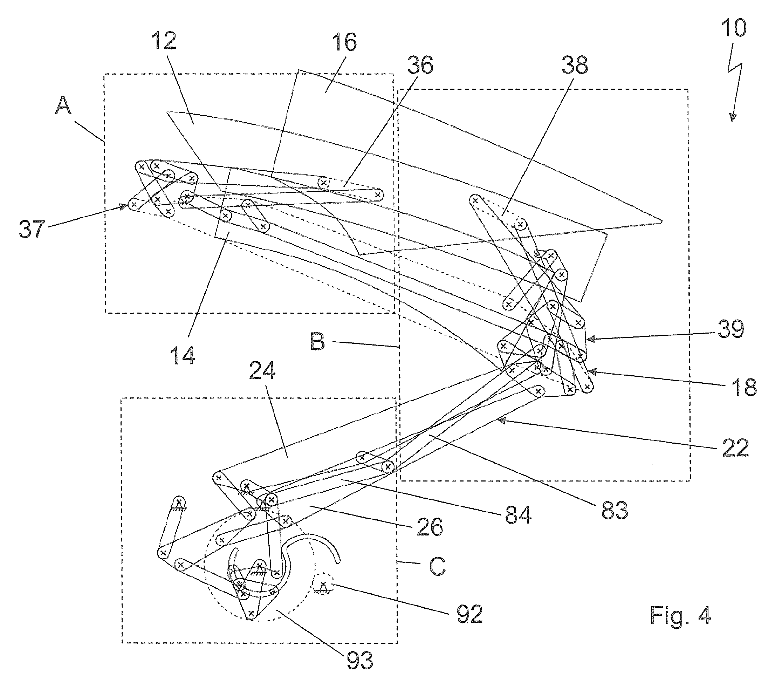

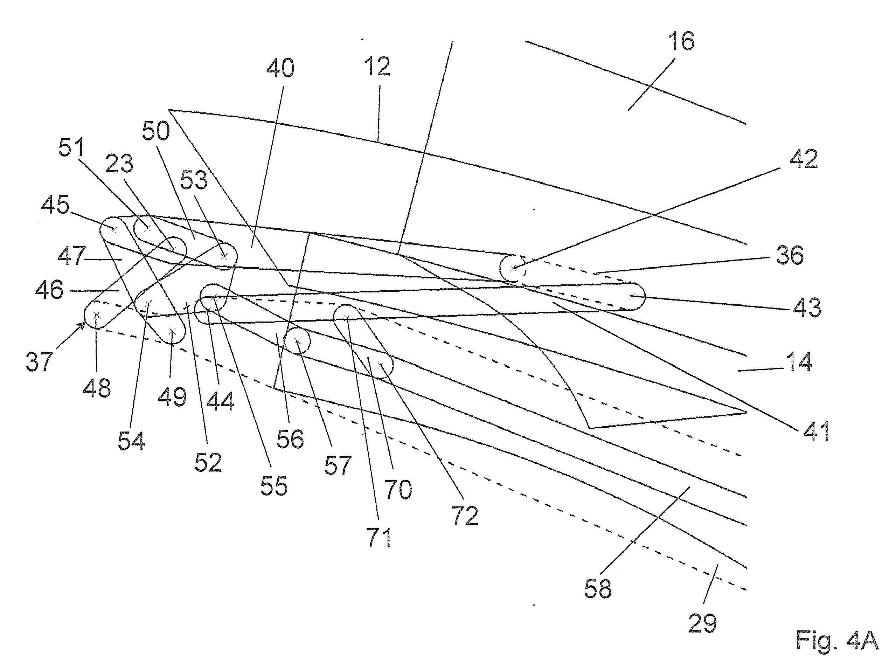

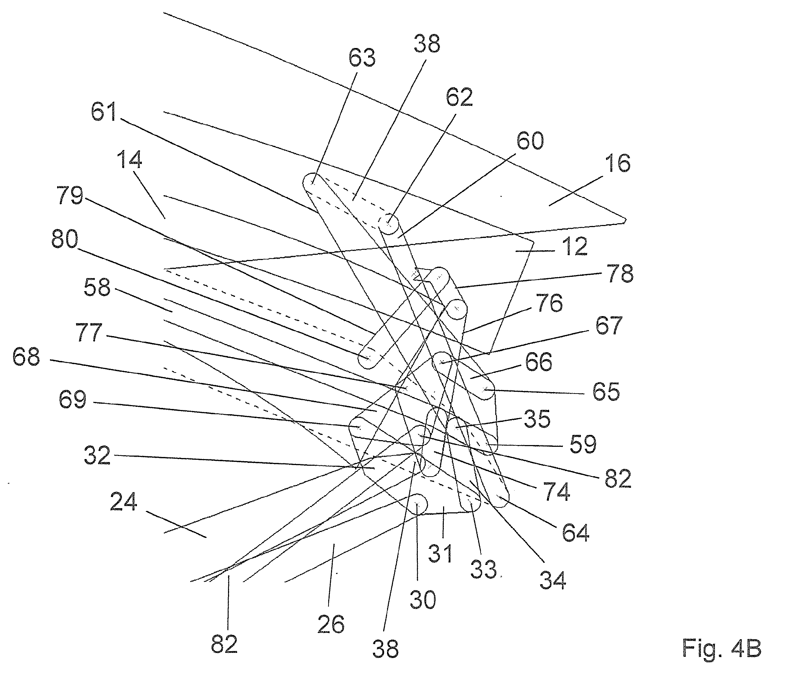

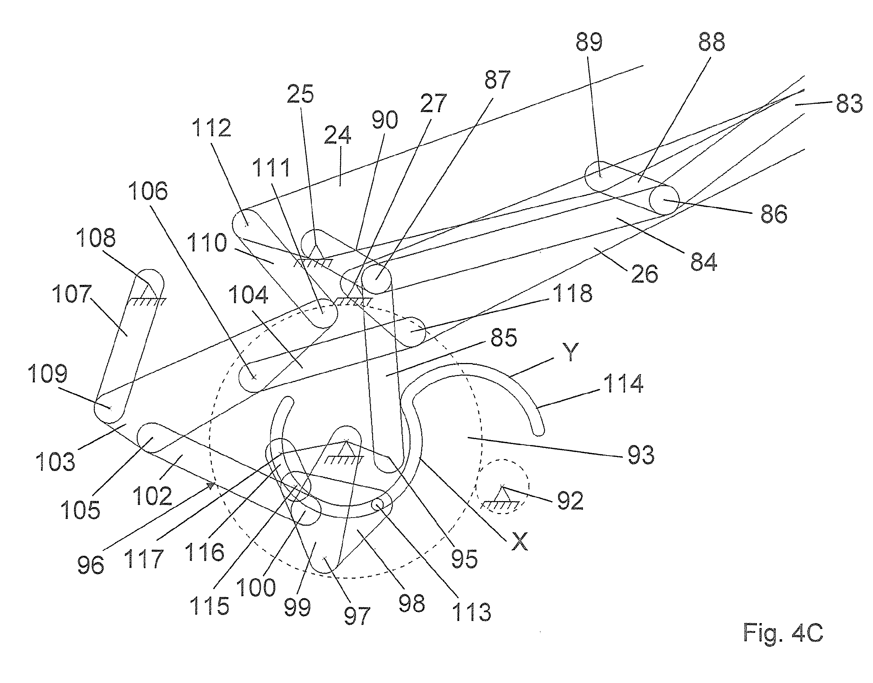

Während der ersten, vorstehend beschriebenen Verstellphase für die Dachschalen 12 und 16 gegenüber der Dachschale 14 wird die Hauptmehrgelenkanordnung, die die beiden Hauptlenker 24 und 26 umfasst, noch nicht betätigt. Dies wird dadurch gewährleistet, dass der Führungszapfen 113 des Steuerlenkers 98 in dem Bahnabschnitt Y der Führungsbahn 114 geführt wird und damit über die Zwischenlenker 102, 103 und 104 kein Verstellmoment in den zweiten Hauptlenker 26 eingetragen wird. Der Verstellvorgang für die Dachschalen 12 und 16 ist weitgehend abgeschlossen, wenn der Führungszapfen 113 den Wendepunkt zwischen den Bahnabschnitten Y und X der Führungsbahn 114 erreicht. Wenn nun das Antriebsrad 93 weiter im Uhrzeigersinn gedreht wird, sind der Steuerlenker 98, der Dreieckslenker 99 und der Übertragungslenker 116 gegenüber dem Antriebsrad 93 drehfest, so dass sie zusammen mit dem Antriebsrad 93 weiter im Uhrzeigersinn verdreht werden. Damit wird über die Zwischenlenker 102, 103 und 104 ein Verstellmoment in den zweiten Hauptlenker 26 eingetragen, wodurch das Verdeck in der in den Figuren 4 und 5 dargestellten Weise in seine in Fig. 5 dargestellte Ablagestellung gebracht wird. Der Führungszapfen 113 durchfährt hierbei den Bahnabschnitt X der Führungsbahn 114.

Das Verstellen des Verdecks aus der Ablagestellung in die in Figur 1 dargestellte Schließstellung erfolgt in entsprechend umgekehrter Weise.

### Bezugszeichenliste

- 10: Dach
- 12: Dachschale
- 14: Dachschale
- 16: Dachschale
- 18: Gestängeanordnung
- 20: Hauptlager
- 22: Hauptmehrgelenkanordnung
- 23: Gelenkpunkt
- 24: erster Hauptlenker
- 25: Gelenkpunkt
- 26: zweiter Hauptlenker
- 27: Gelenkpunkt
- 28: Gelenkpunkt
- 29: mittlerer Dachlenker
- 30: Gelenkpunkt
- 31: Umlenkhebel
- 32: Gelenkpunkt
- 33: Gelenkpunkt
- 34: Steuerhebel
- 35: Gelenkpunkt
- 36: vorderer Dachlenker
- 37: vordere Mehrgelenkanordnung
- 38: hinterer Dachlenker
- 39: hintere Mehrgelenkanordnung
- 40: Schalenhauptlenker
- 41: Schalenhauptlenker
- 42: Gelenkpunkt
- 43: Gelenkpunkt
- 44: Gelenkpunkt
- 45: Gelenkpunkt
- 46: Zwischenlenker
- 47: Zwischenlenker
- 48: Gelenkpunkt
- 49: Gelenkpunkt
- 50: Hebel
- 51: Gelenkpunkt
- 52: Dreieckslenker
- 53: Gelenkpunkt
- 54: Gelenkpunkt
- 55: Gelenkpunkt
- 56: Stelllenker
- 57: Gelenk
- 58: Koppelstange
- 59: Gelenkpunkt
- 60: Schalenhauptlenker
- 61: Schalenhauptlenker
- 62: Gelenkpunkt
- 63: Gelenkpunkt
- 64: Gelenkpunkt
- 65: Gelenkpunkt
- 66: Steuerlenker
- 67: Gelenkpunkt
- 68: Dreieckslenker
- 69: Gelenkpunkt
- 70: Lagerhebel
- 71: Gelenkpunkt
- 72: Gelenkpunkt
- 73: Gelenkpunkt
- 74: Lagerhebel
- 75: Gelenkpunkt
- 76: Dreieckslenker
- 77: Anlenkpunkt
- 78: Zwischenlenker
- 79: Zwischenlenker
- 80: Anlenkpunkt
- 81: Gelenkpunkt
- 82: Gelenkpunkt
- 83: Koppellenker
- 84: Koppellenker
- 85: Koppellenker
- 86: Gelenk
- 87: Gelenk
- 88: Umlenkhebel
- 89: Gelenkpunkt
- 90: Umlenkhebel
- 91: Gelenkpunkt
- 92: Antriebsritzel
- 93: Antriebsrad
- 94: Antriebsmotor
- 95: Gelenkpunkt
- 96: Antriebsgestänge
- 97: Gelenkpunkt
- 98: Steuerlenker
- 99: Dreieckslenker
- 100: Gelenkpunkt
- 101: Gelenkpunkt
- 102: Zwischenlenker
- 103: Zwischenlenker
- 104: Zwischenlenker
- 105: Gelenkpunkt
- 106: Gelenkpunkt
- 107: Stützhebel
- 108: Anlenkpunkt
- 109: Gelenkpunkt
- 110: Stützhebel
- 111: Gelenkpunkt
- 112: Anlenkpunkt
- 113: Führungszapfen
- 114: Führungsbahn
- 115: Gelenkpunkt
- 116: Übertragungslenker
- 117: Anlenkpunkt
- 118: Gelenkpunkt

## Patentansprüche

1. Verdeck eines Cabriolet-Fahrzeugs, umfassend ein Verdeckgestänge, das zwischen einer Schließstellung, in der ein Fahrzeuginnenraum von dem Verdeck überspannt ist, und einer Ablagestellung verstellbar ist, in der der Fahrzeuginnenraum nach oben freigegeben ist, und das bezogen auf eine vertikale Verdecklängsmittelebene beidseits jeweils eine Gestängeanordnung (18) aufweist, die eine Hauptmehrgelenkanordnung (22) mit zwei an einem fahrzeugfesten Hauptlager (20) schwenkbar gelagerten Hauptlenkern (24, 26), einen mittleren Dachlenker (29), einen mit dem mittleren Dachlenker (29) schwenkbar verbundenen, vorderen Dachlenker (36) und einen mit dem mittleren Dachlenker (29) schwenkbar verbundenen, hinteren Dachlenker (38) umfasst, wobei der vordere Dachlenker (36) und der hintere Dachlenker (38) mittels einer Koppelstange (58) gemeinsam gegenüber dem mittleren Dachlenker (29) verschwenkbar sind und die Hauptmehrgelenkanordnung (22) von einem Hauptantrieb angetrieben ist, der an dem Hauptlager (20) angeordnet ist, **dadurch gekennzeichnet, dass** der vordere Dachlenker (36) und der hintere Dachlenker (38) zum Verschwenken gegenüber dem mittleren Dachlenker (29) über eine Koppeleinrichtung mittels des Hauptantriebs angetrieben sind.

2. Verdeck nach Anspruch 1, **dadurch gekennzeichnet, dass** die Koppeleinrichtung eine Koppellenkeranordnung umfasst, die entlang der Hauptmehrgelenkanordnung (22) geführt ist und die mit einer Mehrgelenkanordnung (39) verbunden ist, an die der hintere Dachlenker (38) angelenkt ist.

3. Verdeck nach Anspruch 2, **dadurch gekennzeichnet, dass** die Koppellenkeranordnung mindestens zwei Koppellenker (83, 84, 85) umfasst, die sich in einem gemeinsamen Gelenkpunkt (86, 87) oder an getrennten Gelenkpunkten an einem Umlenkhebel (88, 90) abstützen, der an einem der Hauptlenker (24) oder dem Hauptlager (20) schwenkbar gelagert ist.

4. Verdeck nach Anspruch 2 oder 3, **dadurch gekennzeichnet, dass** die Mehrgelenkanordnung für den hinteren Dachlenker (38) einen Dreieckslenker (68) umfasst, der an einem die beiden Hauptlenker (24, 26) miteinander verbindenden Umlenkhebel (31) schwenkbar gelagert ist und an dem die Koppellenkeranordnung und ein Steuerlenker (66) angelenkt sind, der mit einem Lenker (61) verbunden ist, an dem der hintere Dachlenker (38) angelenkt ist.

5. Verdeck nach Anspruch 4, **dadurch gekennzeichnet, dass** die Koppelstange (58) an dem Lenker (61) angebunden ist, an dem der hintere Dachlenker (38) angelenkt ist.

6. Verdeck nach einem der Ansprüche 2 bis 5, **dadurch gekennzeichnet, dass** der Hauptantrieb ein Antriebsrad (93) umfasst, an das die Koppellenkeranordnung angelenkt ist.

7. Verdeck nach Anspruch 6, **dadurch gekennzeichnet, dass** das Antriebsrad (93) ein mehrere Zwischenlenker (102, 103, 104) aufweisendes Vorgelege antreibt, das die Hauptmehrgelenkanordnung (22) antreibt.

8. Verdeck nach Anspruch 6 oder 7, **dadurch gekennzeichnet, dass** bei einer Drehung des Antriebsrads (93) die Koppellenkeranordnung stets mit einem Antriebsmoment beaufschlagt ist und die Hauptmehrgelenkanordnung (22) in Abhängigkeit von der Stellung eines Führungselements in einer hauptlagerfesten Führungsbahn (114) entweder in Position gehalten ist oder mit einem Antriebsmoment beaufschlagt ist.

9. Verdeck nach Anspruch 8, **dadurch gekennzeichnet, dass** das Führungselement an einem Lenker (98) ausgebildet ist, der schwenkbar mit einem Dreieckslenker (99) verbunden ist, dessen Schwenkachse mit einer Drehachse (A) des Antriebsrads (93) zusammenfällt.

10. Verdeck nach Anspruch 8 oder 9, **dadurch gekennzeichnet, dass** die Führungsbahn (114) einen ersten Bahnabschnitt (X), der konzentrisch zum Umfang des Antriebsrads (93) verläuft, und einen zweiten Bahnabschnitt (Y) aufweist, der gegenüber dem ersten Bahnabschnitt (X) einen gegensinnig bogenförmigen Verlauf hat, so dass bei einer Anordnung des Führungselements in dem ersten Bahnabschnitt (X) von dem Antriebsrad (93) das Antriebsmoment in die Hauptmehrgelenkanordnung (22) eingetragen wird und bei einer Anordnung des Führungselements in dem zweiten Bahnabschnitt (Y) die Hauptmehrgelenkanordnung (22) des Antriebsrads (93) stillsteht.

11. Verdeck nach einem der Ansprüche 6 bis 10, **dadurch gekennzeichnet, dass** das Antriebsrad (93) ein Zahnrad ist, das von einem Antriebsritzel (92) des Hauptantriebs angetrieben ist.

12. Verdeck nach einem der Ansprüche 1 bis 11, **dadurch gekennzeichnet, dass** es ein Klappdach mit drei Dachschalen (12, 14, 16) ist, von denen eine Dachschale (12) an dem vorderen Dachlenker (36), eine zweite Dachschale (14) an dem mittleren Dachlenker (29) und eine dritte Dachschale (16) an dem hinteren Dachlenker (38) angebunden ist.
